# EUROPÄISCHE PATENTANMELDUNG

(11) **EP 4 005 388 A1**
(43) Veröffentlichungstag der Anmeldung: **01.06.2022**
(21) Anmeldenummer: 21209173.0
(22) Anmeldetag: 19.11.2021
(51) Int. Cl.: A21C 3/02, A21C 9/08

(54) **TEIGWALZVORRICHTUNG**

(30) Priorität: 30.11.2020 DE 102020131673
(71) Anmelder: Fritsch Bakery Technologies GmbH & Co. KG, 97348 Markt Einersheim (DE)
(72) Erfinder: Appoldt, Matthias, 97353 Feuerbach (DE)
(74) Vertreter: Grünecker Patent- und Rechtsanwälte PartG mbB

(57) **Zusammenfassung**

Eine Teigwalzvorrichtung (1) umfasst eine erste Fördervorrichtung (2) und eine zweite Fördervorrichtung (3) sowie eine zwischen der ersten und der zweiten Fördervorrichtung (2, 3) angeordnete Walzbaugruppe (4), die zum Walzen eines Teigstrangs (5) konfiguriert ist. Die erste und die zweite Fördervorrichtung (2, 3) sind jeweils zwischen einem ersten Modus und einem zweiten Modus umschaltbar, wobei die jeweilige Fördervorrichtung (2, 3) in dem ersten Modus dazu konfiguriert ist, den Teigstrang (5) zu der Walzbaugruppe (4) zuzuführen, und wobei die jeweilige Fördervorrichtung (2, 3) in dem zweiten Modus dazu konfiguriert ist, den Teigstrang (5) von der Walzbaugruppe (4) fortzuführen. Die Teigwalzvorrichtung (1) zeichnet sich durch eine Greifvorrichtung (6) aus, die dazu konfiguriert ist, einen Endabschnitt (5a) des auf der ersten Fördervorrichtung (2) angeordneten Teigstrangs (5) zu ergreifen.

## Beschreibung

Die Erfindung bezieht sich auf Teigwalzvorrichtungen gemäß dem Oberbegriff des Anspruchs 1.

Aus dem Stand der Technik, bspw. aus DE 1 284 373 B oder DE 40 02 715 C1, sind Teigwalzvorrichtungen bekannt, die zwei Förderbänder und eine dazwischen angeordnete Walzstation umfassen. Teig wird durch eines der Förderbänder zu der Walzstation hingeführt und dort zwischen zwei Walzen hindurch geführt und durch diese gewalzt. Auf der anderen Seite der Walzstation wird der Teig nach dem Walzen durch das andere der Förderbänder aufgenommen und von der Walzstation fortgeführt. Nachdem der ganze Teig gewalzt wurde, kann die Richtung dieses Prozesses umgekehrt werden, sodass der Teig hin und her gefördert und bei jedem Durchlaufen der Walzstation weiter ausgewalzt wird.

Mitunter werden solche Teigwalzvorrichtungen auch zum Laminieren oder Einziehen von Fett in ein Teigband genutzt. Dabei wird zunächst eine Fettschicht, bspw. Butter oder Margarine, durch einen Maschinenbediener in ein Teigband eingeschlagen. Nach dem Auswalzen wird das ausgewalzte Band aus Teig und Fett gefaltet und wiederum ausgewalzt, sodass mehrschichtige Teigprodukte entstehen. Je nachdem, wie die Faltung erfolgt, muss das gefaltete Teigpaket auch um eine senkrecht zu der Förderfläche verlaufende Achse gedreht werden. Während die Effizienz beim Umkehren der Förder- bzw. Walzrichtung sowie beim Verändern der Walzdicke schon durch Automatisierung verbessert werden konnte, müssen das Einschlagen, Falten und Drehen bei herkömmlichen Vorrichtungen manuell durch einen Bediener erledigt werden.

Es ist eine Aufgabe der Erfindung, eine Teigwalzvorrichtung anzugeben, deren Effizienz durch einen höheren Automatisierungsgrad verbessert ist.

Diese Aufgabe wird erfindungsgemäß gelöst durch eine Teigwalzvorrichtung mit den Merkmalen des Anspruchs 1. Vorteilhafte Weiterbildungen sind in den abhängigen Ansprüchen angegeben.

Die Anmeldung bezieht sich auf eine Teigwalzvorrichtung mit einer ersten Fördervorrichtung und einer zweiten Fördervorrichtung sowie einer zwischen der ersten und der zweiten Fördervorrichtung angeordneten Walzbaugruppe. Die Walzbaugruppe ist zum Walzen eines Teigstrangs konfiguriert, wobei die erste und die zweite Fördervorrichtung jeweils zwischen einem ersten Modus und einem zweiten Modus umschaltbar sind. In dem ersten Modus ist die jeweilige Fördervorrichtung dazu konfiguriert, den Teigstrang zu der Walzbaugruppe zuzuführen, und in dem zweiten Modus ist die jeweilige Fördervorrichtung dazu konfiguriert, den Teigstrang von der Walzbaugruppe fortzuführen. Die Teigwalzvorrichtung zeichnet sich durch eine Greifvorrichtung aus, die dazu konfiguriert ist, einen Endabschnitt des auf der ersten Fördervorrichtung angeordneten Teigstrangs zu ergreifen.

Eine Greifvorrichtung, die zum Ergreifen eines Endabschnitts des auf der ersten Fördervorrichtung angeordneten Teigstrangs konfiguriert ist, kann mehrere vorteilhafte Bearbeitungsvorgänge ermöglichen, z. B. ein Dehnen, Verschieben oder Anheben des Endabschnitts.

Es kann vorteilhaft sein, wenn die Greifvorrichtung dazu konfiguriert ist, den Endabschnitt des Teigstrangs anzuheben. Ein Anheben des Endabschnitts kann bspw. ein Bestreuen der darunter oder unter dem Teigstrang befindlichen Fördervorrichtung mit Mehl ermöglichen. Besonders günstig kann es sein, wenn die Teigwalzvorrichtung dazu konfiguriert ist, einen Rest des Teigstrangs unter dem angehobenen Endabschnitt hindurch zu fördern. Dadurch kann z. B. ein Wenden und/oder ein Falten des Teigstranges ermöglicht werden. Zum Anheben kann die Greifvorrichtung einen Bügel umfassen, der die erste Fördervorrichtung zumindest teilweise quer zu ihrer Förderrichtung überragen oder überspannen kann. Der Bügel kann um eine Achse schwenkbar sein, die quer zu der Förderrichtung der ersten Fördervorrichtung orientiert sein kann.

Es ist denkbar, dass die Greifvorrichtung zwei oder mehr Greifer umfasst. Auch ein einzelner Greifer ist vorstellbar. Zwei oder mehr Greifer können jedoch den Vorteil aufweisen, dass sie flexibler einsetzbar sind. So ist es vorstellbar, dass mehrere Teigstränge nebeneinander auf der Fördervorrichtung gefördert und durch die Greifer zu unterschiedlichen Zeitpunkten ergriffen und/oder losgelassen werden können.

Alternativ oder zusätzlich können die Greifer jeweils dazu konfiguriert sein, den Teigstrang, insbesondere ein und denselben Teigstrang, an Greifabschnitten zu ergreifen, die quer zu der Förderrichtung der ersten Fördervorrichtung voneinander beabstandet sind.

Besonders günstig kann es sein, wenn einer oder mehrere der Greifer oder alle Greifer quer zu einer Förderrichtung der ersten Fördervorrichtung relativ zu der ersten Fördervorrichtung verschiebbar sind. Dadurch können die Positionen der Greifer an eine Breite eines auf der Fördervorrichtung angeordneten Teigstrangs und/oder an eine Anzahl von auf der Fördervorrichtung nebeneinander angeordneten Teigsträngen angepasst werden.

Es ist auch vorstellbar, dass die Teigwalzvorrichtung eine zweite Greifvorrichtung umfasst, die dazu konfiguriert ist, einen Endabschnitt eines auf der zweiten Fördervorrichtung angeordneten Teigstrangs zu ergreifen. Die vorstehend mit Bezug auf die Greifvorrichtung beschriebenen Konfigurationsmöglichkeiten können auch auf die zweite Greifvorrichtung anwendbar sein. Eine zweite Greifvorrichtung kann einen noch effizienteren Betrieb der Teigwalzvorrichtung ermöglichen, da die Handhabung des Teigbandes durch eine der Greifvorrichtungen auf beiden Seiten der Walzbaugruppe stattfinden können. Außerdem kann es ermöglicht werden, beide Endabschnitte eines Teigstrangs zu Ergreifen und/oder Anzuheben, ohne dass der Teigstrang gewendet oder gedreht werden muss.

Es ist vorstellbar, dass die erste oder die zweite Fördervorrichtung zwei Förderbänder umfasst. Dadurch kann es ermöglicht werden, einen oder mehrere Teigstränge auf zusätzliche Arten zu manipulieren oder zu Fördern. Bspw. können zwei nebeneinander liegende Teigstränge durch zwei Förderbänder zueinander ausgerichtet werden, sodass z. B. eine oder mehrere ihrer Kanten aufeinander ausgerichtet sind.

Es ist vorteilhaft, wenn die zwei Förderbänder nebeneinander angeordnet sind. Dadurch können z. B. zwei nebeneinander liegende Teigstränge so ausgerichtet werden, dass ihre der Walzbaugruppe zugewandten Kanten gleichzeitig in die Walzbaugruppe einlaufen. Insbesondere bei solchen Anwendungen ist es besonders günstig, wenn jedes der zwei Förderbänder im ersten Modus der jeweiligen Fördervorrichtung zum Zuführen eines Teigstrangs zu der Walzbaugruppe und im zweiten Modus der jeweiligen Fördervorrichtung zum Wegführen des Teigstrangs von der Walzbaugruppe fort konfiguriert ist.

Vorteilhafterweise können die zwei Förderbänder mit unterschiedlichen Geschwindigkeiten antreibbar sein. Dies kann eine Drehung eines, insbesondere gefalteten, Teigstranges um eine senkrecht auf einer Förderfläche der ersten und/oder zweiten Fördervorrichtung stehende Achse ermöglichen. Auch ein Verzug, der manchmal beim Walzen entstehen kann, kann dadurch korrigierbar sein.

Es ist vorstellbar, dass in einem dritten Modus die zwei Förderbänder in entgegengesetzte Richtungen antreibbar sind. Dadurch kann der durch Förderbänder, die mit unterschiedlichen Geschwindigkeiten antreibbar sind, erreichbare Effekt noch verstärkt und ggf. beschleunigt werden.

Die Erfindung bezieht sich auf eine Teigwalzvorrichtung der vorstehend beschriebenen Art. Im Folgenden wird ein vorteilhaftes Ausführungsbeispiel anhand von Zeichnungen beispielhaft beschrieben.
- Fig. 1: zeigt eine schematische perspektivische Ansicht eine Teigwalzvorrichtung.
- Fig. 2: zeigt eine schematische Seitenansicht der Teigwalzvorrichtung aus Figur 1.
- Fig. 3: zeigt eine schematische Draufsicht von oben der Teigwalzvorrichtung aus den Figuren 1 und 2.

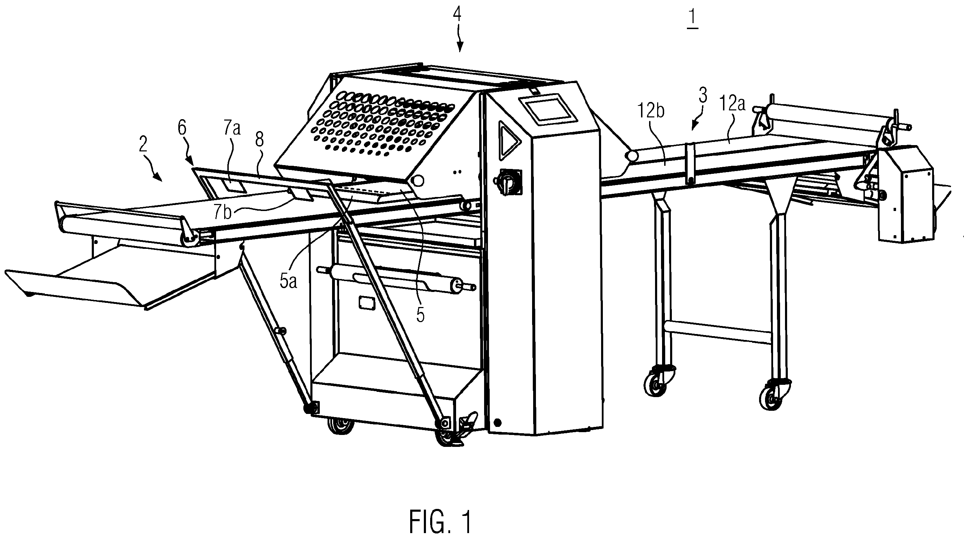

In Figur 1 ist eine Teigwalzvorrichtung 1 in einer schematischen Perspektivansicht dargestellt. Die Teigwalzvorrichtung 1 kann eine erste Fördervorrichtung 2 und eine zweite Fördervorrichtung 3 umfassen. Des Weiteren kann die Teigwalzvorrichtung 1 eine Walzbaugruppe 4 umfassen, die zum Walzen eines Teigstrangs 5 konfiguriert sein kann. Die Walzbaugruppe 4 kann zwischen der ersten Fördervorrichtung 2 und der zweiten Fördervorrichtung 3 angeordnet sein. Die erste Fördervorrichtung 2 und die zweite Fördervorrichtung 3 können jeweils zwischen einem ersten Modus und einem zweiten Modus umschaltbar sein. In dem ersten Modus kann die jeweilige Fördervorrichtung 2, 3 dazu konfiguriert sein, den Teigstrang 5 zu der Walzbaugruppe 4 hin zu führen. In dem zweiten Modus kann die jeweilige Fördervorrichtung 2, 3 dazu konfiguriert sein, den Teigstrang 5 von der Walzbaugruppe 4 fortzuführen.

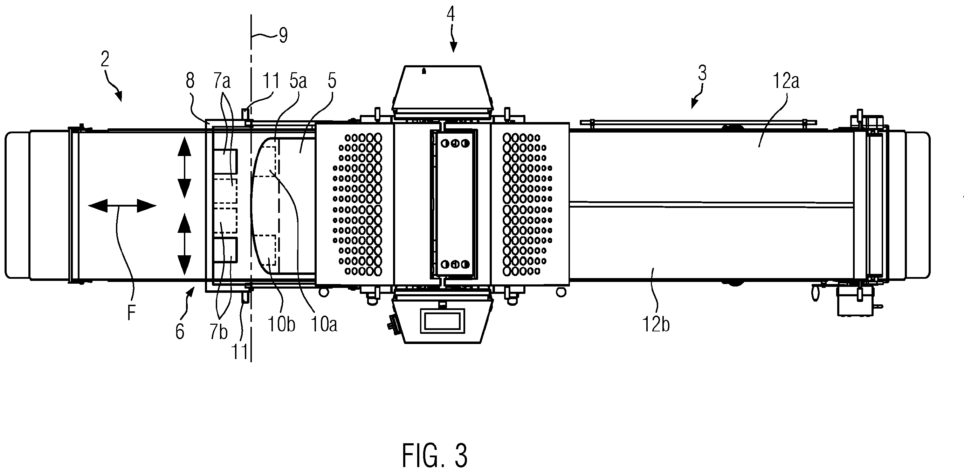

Die Teigwalzvorrichtung 1 kann darüber hinaus eine Greifvorrichtung 6 umfassen. Die Greifvorrichtung 6 kann dazu konfiguriert sein, einen Endabschnitt 5a (in Figur 1 durch die gestrichelte Linie dargestellt) des auf der ersten Fördervorrichtung 2 angeordneten Teigstrangs 5 zu ergreifen. Wie im vorliegenden Ausführungsbeispiel dargestellt, kann die Greifvorrichtung 6 zwei Greifer 7, insbesondere einen ersten Greifer 7a und einen zweiten Greifer 7b aufweisen. Wie im vorliegenden Ausführungsbeispiel dargestellt, kann die Greifvorrichtung 6 einen Bügel 8 aufweisen, an dem der erste Greifer 7a und der zweite Greifer 7b angeordnet sein können. Die Greifvorrichtung 6, insbesondere der Bügel 8, kann um eine Achse 9 (siehe Figur 3) schwenkbar sein.

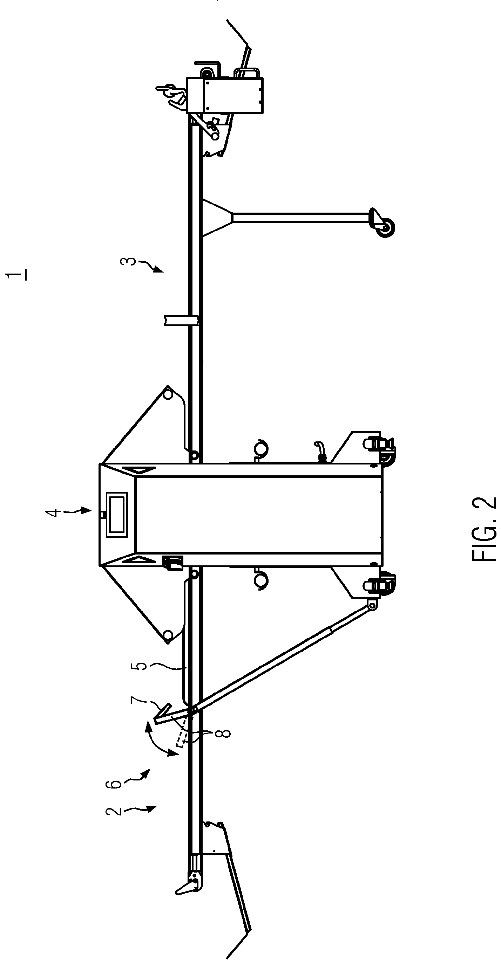

In Figur 2 ist die Teigwalzvorrichtung 1 in einer schematischen Seitenansicht dargestellt. Mit den durchgezogenen Linien ist illustriert, dass die Greifvorrichtung 6, insbesondere der Bügel 8, in einer nach oben geschwenkten Position angeordnet werden kann. Mit der gestrichelten Linie ist angedeutet, dass die Greifvorrichtung 6, insbesondere der Bügel 8, in einer Richtung hin zu der ersten Fördervorrichtung 2 in eine nach unten geschwenkte Position bewegbar sein kann.

In Figur 3 ist die Teigwalzvorrichtung 1 in einer schematischen Draufsicht von oben dargestellt. Die Greifvorrichtung 6, insbesondere der Bügel 8, ist hier in einer nach unten geschwenkten Position dargestellt. In dieser Position kann der Teigstrang 5 in Richtung der Greifvorrichtung 6, insbesondere der Greifer 7, gefördert werden. Der erste Greifer 7a und der zweite Greifer 7b können geöffnet sein, sodass der Endabschnitt 5a des Teigstrangs 5 in den geöffneten Greifern 7a, 7b positioniert werden kann. Wenn der Endabschnitt 5a des Teigstrangs 5 in den geöffneten Greifern 7a, 7b positioniert ist, können die Greifer 7a, 7b geschlossen werden. Dabei kann der Endabschnitt 5a des Teigstrangs 5 in den Greifer 7a, 7b eingeklemmt werden. Durch Schwenken der Greifvorrichtung 6, insbesondere des Bügels 8, um die Achse 9 kann der Endabschnitt 5a des Teigstrangs 5 angehoben werden.

Durch gestrichelte Linien sind in dem Endabschnitt 5a des Teigstrangs 5 Greifabschnitte 10a, 10b angedeutet. Dies können die Bereiche sein, in denen der Teigstrang 5 durch den ersten und den zweiten Greifer 7a, 7b ergriffen werden. Durch Verschieben eines oder mehrerer der Greifer 7a, 7b kann die Positionierung einer oder mehrerer der Greifabschnitte 10a, 10b verändert werden. Die Greifer 7a, 7b können dabei insbesondere in einer Richtung quer zu einer Förderrichtung F der ersten Fördervorrichtung 2 verschiebbar sein. Durch gestrichelte Linien ist eine alternative Position der Greifer 7a, 7b angedeutet.

Die Teigwalzvorrichtung 1 kann des Weiteren eine oder mehrere Sensoreinheiten 11 umfassen. Die Sensoreinheit 11 kann dazu konfiguriert sein, eine Vorderkante des Teigstrangs 5 zu erfassen. Die Sensoreinheit 11 kann beispielsweise einen Lichtschrankensensor enthalten. Durch die Erfassung der Vorderkante des Teigstrangs 5 kann die Positionierung des Endabschnitts 5a des Teigstrangs 5 in den geöffneten Greifern 7a, 7b erleichtert werden. Die Sensoreinheit 11 kann, wie im vorliegenden Ausführungsbeispiel, an der Greifvorrichtung 6, insbesondere an dem Bügel 8, angeordnet sein. Es ist jedoch auch denkbar, dass die Sensoreinheit 11 an einer anderen geeigneten Stelle der Teigwalzvorrichtung 1 angeordnet ist, zum Beispiel an einem Übergangsbereich zwischen der Walzbaugruppe 4 und der ersten Fördervorrichtung 2.

In Figur 3 ist ebenfalls zu erkennen, dass die zweite Fördervorrichtung 3 zwei Förderbänder 12a, 12b umfassen kann. Es sollte klar sein, dass dies lediglich beispielhaft zu verstehen ist und auch die erste Fördervorrichtung 2 zwei Förderbänder umfassen kann. Ebenso ist es denkbar, dass sowohl die erste Fördervorrichtung 2 als auch die zweite Fördervorrichtung 3 zwei Förderbänder umfassen. Wie im vorliegenden Ausführungsbeispiel, können die Förderbänder 12a, 12b nebeneinander angeordnet sein. Alternativ oder zusätzlich kann jedes der zwei Förderbänder im ersten Modus der zweiten Fördervorrichtung 3 zum Zuführen des Teigstrangs 5 zu der Walzbaugruppe 4 und im zweiten Modus der zweiten Fördervorrichtung 3 zum Wegführen des Teigstrangs 5 von der Walzbaugruppe 4 fort konfiguriert sein.

Die zwei Förderbänder 12a, 12b können mit unterschiedlichen Geschwindigkeiten antreibbar sein. Außerdem ist es denkbar, dass in einem dritten Modus die zwei Förderbänder 12a, 12b in entgegengesetzte Richtungen antreibbar sind. Zum Antreiben der zwei Förderbänder 12a, 12b in unterschiedliche Richtungen und/oder mit unterschiedlichen Geschwindigkeiten können die zwei Förderbänder 12a, 12b jeweils einen separaten Antrieb aufweisen alternativ ist es denkbar, dass die zwei Förderbänder 12a, 12b einen gemeinsamen Antrieb mit einem Getriebe aufweisen, welches zwischen den verschiedenen erwähnten Modi umschaltbar ist.

## Patentansprüche

1. Teigwalzvorrichtung (1) mit einer ersten Fördervorrichtung (2) und einer zweiten Fördervorrichtung (3) sowie einer zwischen der ersten und der zweiten Fördervorrichtung (2, 3) angeordneten Walzbaugruppe (4), die zum Walzen eines Teigstrangs (5) konfiguriert ist, wobei die erste und die zweite Fördervorrichtung (2, 3) jeweils zwischen einem ersten Modus und einem zweiten Modus umschaltbar sind, wobei die jeweilige Fördervorrichtung (2, 3) in dem ersten Modus dazu konfiguriert ist, den Teigstrang (5) zu der Walzbaugruppe (4) zuzuführen, und wobei die jeweilige Fördervorrichtung (2, 3) in dem zweiten Modus dazu konfiguriert ist, den Teigstrang (5) von der Walzbaugruppe (4) fortzuführen,
**gekennzeichnet durch** eine Greifvorrichtung (6), die dazu konfiguriert ist, einen Endabschnitt (5a) des auf der ersten Fördervorrichtung (2) angeordneten Teigstrangs (5) zu ergreifen.

2. Teigwalzvorrichtung nach Anspruch 1, wobei die Greifvorrichtung (6) dazu konfiguriert ist, den Endabschnitt (5a) des Teigstrangs (5) anzuheben.

3. Teigwalzvorrichtung nach Anspruch 2, wobei die Teigwalzvorrichtung (4) dazu konfiguriert ist, einen Rest des Teigstrangs (5) unter dem angehobenen Endabschnitt (5a) hindurch zu fördern.

4. Teigwalzvorrichtung nach einem der vorangehenden Ansprüche, wobei die Greifvorrichtung (6) zwei oder mehr Greifer (7, 7a, 7b) umfasst.

5. Teigwalzvorrichtung nach Anspruch 4, wobei die Greifer (7, 7a, 7b) jeweils dazu konfiguriert sind, den Teigstrang (5) an Greifabschnitten (10a, 10b) zu ergreifen, die quer zu einer Förderrichtung (F) der ersten Fördervorrichtung (2) voneinander beabstandet sind.

6. Teigwalzvorrichtung nach Anspruch 4 oder 5, wobei einer oder mehrere der Greifer (7, 7a, 7b) oder alle Greifer (7, 7a, 7b) quer zu einer Förderrichtung (F) der ersten Fördervorrichtung (2) relativ zu der ersten Fördervorrichtung (2) verschiebbar sind.

7. Teigwalzvorrichtung nach einem der vorangehenden Ansprüche, wobei die erste oder die zweite Fördervorrichtung (2, 3) zwei Förderbänder (12a, 12b) umfasst.

8. Teigwalzvorrichtung nach Anspruch 7, wobei die zwei Förderbänder (12a, 12b) nebeneinander angeordnet sind.

9. Teigwalzvorrichtung nach Anspruch 7 oder 8, wobei jedes der zwei Förderbänder (12a, 12b) im ersten Modus der jeweiligen Fördervorrichtung (2, 3) zum Zuführen eines Teigstrangs (5) zu der Walzbaugruppe (4) und im zweiten Modus der jeweiligen Fördervorrichtung (2, 3) zum Wegführen des Teigstrangs (5) von der Walzbaugruppe (4) fort konfiguriert ist.

10. Teigwalzvorrichtung nach einem der Ansprüche 7 bis 9, wobei die zwei Förderbänder (12a, 12b) mit unterschiedlichen Geschwindigkeiten antreibbar sind.

11. Teigwalzvorrichtung nach einem der Ansprüche 7 bis 10, wobei in einem dritten Modus die zwei Förderbänder (12a, 12b) in entgegengesetzte Richtungen antreibbar sind.
